# EUROPEAN PATENT SPECIFICATION

(11) **EP 1 280 681 B1**
(45) Date of publication and mention of the grant of the patent: **03.03.2004**
(21) Application number: 99941836.1
(22) Date of filing: 02.09.1999
(51) Int. Cl.: B60R 1/00

(54) **A DEVICE FOR RECORDING IMAGE OF DRIVING CIRCUMSTANCES AROUND AUTOMOBILE**
VORRICHTUNG ZUR AUFZEICHNUNG VON BILDERN IM VERKEHRSUMFELD
DISPOSITIF D'ENREGISTREMENT D'EVENEMENTS EN RAPPORT AVEC LA CONDUITE AUTOUR D'UNE AUTOMOBILE

(43) Date of publication of application: 05.02.2003
(73) Proprietor: Lee, Eung Do, Taejeon 300-091 (KR)
(72) Inventor: JUNG, Duk, Jin, Seo-gu, Taejeon 302-230 (KR)
(74) Representative: Smith, Peter James
(86) International application number: PCT/KR1999/000505
(87) International publication number: WO 2001/015936

(56) References cited:
- EP-A1- 0 921 375
- DE-A1- 19 700 793
- GB-A- 2 224 358
- US-A- 5 475 494

## Description

### Technical Field

The present invention relates to a device mounted to an automobile for automatically recording circumstances around the automobile as images with sounds, and more particularly, the present invention relates to a device for recording an image of driving circumstances around an automobile, wherein cameras for obtaining images are mounted to the automobile, image information obtained by the cameras is converted into digital signals and then stored to a recording medium, and the recorded image information can be decoded to be displayed on a monitor or the recording medium can be disconnected from the device to allow images to be reproduced using a separate image reproducing unit.

### Background Art

Generally, when an automobile is running, stopped or parked, driving circumstances around one's own automobile can change unpredictably. If one's own automobile is involved in an accident with another automobile (or a walker) while the automobiles are running, it is necessary to secure some form of convincing evidence having objectivity and which can be used for judging a fault among the parties concerned. This is considered to be a very important factor, not only to oneself, but also to the driver of the other automobile or the walkers.

However, it is very difficult to secure any form of convincing evidence having the desired objectivity in respect of an accident which occurs when one's own automobile is running, stopped or parked. Typically, the judgement of which party is at fault is made mainly on the basis of assertions of both parties, a record of the accident written by a traffic policeman, and/or photographs taken after the accident occurs. Furthermore it is difficult to secure an independent witness and to obtain convincing verbal evidence from the witness.

Another situation where convincing evidence may be needed is where an automobile's tires are punctured or bodywork is scratched by another automobile or an offender. Even if it is possible to catch the offending automobile or seize the offender at a later date, without convincing evidence, it is often impossible to receive any lawful compensation.

Tacographs are disclosed in the art as means for considering driving circumstances of an automobile and obtaining information related to the driving circumstances of the automobile.

However, because the tacograph records a large amount of information such as speed of one's own automobile, angle of the steering wheel, running time of the automobile, etc. at the time when an accident occurs, information for a minor collision, an accident at a pedestrian crossing, a signal violation, or a "hit and run" accident, for example, which may occur while driving the automobile in complex and various road driving circumstances, cannot be properly provided.

Also disclosed in the art is a device in which a sensor is installed on the rear of an automobile for overcoming a problem due to blind areas so that an alarm is rendered when the sensor senses a human body or an obstacle positioned behind the automobile and a device in which a camera capable of imaging blind areas of an automobile is installed to a proper position so that images for the blind areas obtained by the camera are displayed on a monitor located in the vicinity of a driver seat.

However, these devices simply function as auxiliary means used when driving an automobile, and it is impossible for the devices to record and reproduce the particular driving circumstances around the automobile to and from a recording medium as image information.

Meanwhile, prior arts relating to the present invention include EP-A-0921375 showing the features of the preamble of claim 1 and GB-A-2224358.

EP-A-0921375 describes an image recording method and apparatus for describing a virtual space on the basis of sensed images and, more particularly, to a method and apparatus for processing sensed images from a plurality of cameras which are separated from each other as if they were obtained from cameras which are not separated from each other. In other words, according to this invention, an image of driving circumstances around an automobile is photographed through a plurality of cameras provided in the automobile and then synthesized using a computer, thereby acquiring a panoramic image. The reference describes in detail an arrangement of a camera for acquiring such a panoramic image and an image synthesizing method. In practice, however, the technique disclosed in the reference describing a more effective structure and method for acquiring panoramic images cannot be suitably used as an image photographing apparatus for determining an automobile accident in practice. That is to say, in the event of an automobile accident, in order to accurately judge the circumstances of the automobile accidents, it is important to capture the entire image of circumstances around the automobile at the time of the accident. However, the reference describes only an arrangement of a camera and an image processing method for producing panoramic images but methods of acquiring and confirming images of circumstances around the automobile are not disclosed. Also, a system required for producing panoramic images and a processing method thereof are complicated and a large amount of power is consumed, consuming high cost. That is to say, the disclosed system has several problems incomprehensively evaluating situational evidences of an automobile accident in practice.

GB-A-2224358 discloses a vehicle security camera, which may be automatically triggered in an emergency to make a photographic record of for example a collision, or an attempted accomplished break-in, or initiated by an occupant when an emergency is anticipated. According to this technique, the circumstances around an automobile and the inside thereof are photographed and recorded in a storage medium to be utilized as the basis of determination of the circumstances at the time of the automobile accident. According to GB-A-2224358, however, a full consideration is not taken into a method of editing and storing images photographed by the disclosed camera so as to be effectively monitored through a display device. In other words, according to the disclosed technique, since indoor and outdoor photographs of an automobile photographed by a plurality of cameras in a predetermined time interval are individually identified, it is quite difficult to understand the whole circumstances of the automobile in the event of an automobile accident. Also, since the circumstance around the automobile are only known through photographs taken in a predetermined time interval, it is difficult to accurately acquire and know surrounding images of the automobile changing in real time.

### Disclosure of Invention

According to one aspect of the present invention, there is provided a device for recording an image of driving circumstances around an automobile, wherein small-sized cameras are mounted to the automobile for obtaining image information for the front side and the rear side of the automobile as monochrome or color image information, the image information obtained by the cameras is recorded in real time to a recording medium after being converted to digital signals, and the recorded image signals are capable of being reproduced to be displayed on displaying means.

According to another aspect of the present invention, there is provided a device for recording an image of driving circumstances around an automobile, wherein cameras are mounted to center portions of front and rear windshield glasses of the automobile for obtaining image information for the front side and the rear side of the automobile, the image information obtained by the cameras is recorded as capture images in real time and with a predetermined time interval to a recording medium after being converted to digital signals, and the recorded image signals are capable of being reproduced to be displayed on displaying means.

According to still another aspect of the present invention, there is provided a device for recording an image of driving circumstances around an automobile, wherein cameras for obtaining image information for the front side and the rear side of the automobile and means for sensing impact applied from the outside are mounted to the automobile; auxiliary power supply means supplements a battery power supply of the automobile itself while being automatically switched; when impact is applied to the automobile from the outside and damage is caused in a power supplying path of the automobile itself, a power source is automatically switched from the battery power supply to the auxiliary power supply means, and at the same time, images obtained by the cameras are converted into digital signals to be continuously recorded for a predetermined time in real time to a recording medium; and the recorded image signals are capable of being reproduced to be displayed on a display.

According to yet still another aspect of the present invention, there is provided a device for recording an image of driving circumstances around an automobile, wherein sound information is obtained, simultaneously with an image recording, by microphones installed inside and outside the automobile, whereby it is possible to record and reproduce a situation of an accident occurring during running, parking or stopping, in a more realistic manner together with images.

### Brief Description of Drawings

The above objects, and other features and advantages of the present invention will become more apparent after a reading of the following detailed description when taken in conjunction with the drawings, in which:
FIGs. 1A and 1B are plan views illustrating installation positions of cameras when a device for recording an image of driving circumstances is mounted to an automobile, wherein FIG. 1A depicts a state in which a pair of cameras are installed to be opposed to each other and FIG. 1B depicts another state in which a pair of cameras are installed to face each other;
FIG. 2 is a block diagram of the device for recording an image of driving circumstances around an automobile; and
FIG. 3 is a flow chart for explaining recording/reproducing procedures of an image of driving circumstances around an automobile, which are implemented in accordance with the present invention.

### Best Mode for Carrying Out the Invention

Reference will now be made in greater detail to a preferred embodiment of the invention, an example of which is illustrated in the accompanying drawings. Wherever possible, the same reference numerals will be used throughout the drawings and the description to refer to the same or like parts.

Hereinafter, a construction and working effects of a device for recording an image of driving circumstances around an automobile in accordance with an embodiment of the present invention will be described in detail with reference to FIGs. 1A through 3.

FIG. 1A is a plan view illustrating installation positions of cameras in an automobile to which a device for recording an image of driving circumstances around an automobile of the present invention is mounted.

A front first camera 101 is directed toward the front of an automobile 100 and is attached to an inner upper end of a front windscreen glass. An angle a1, through which the first camera 101 can image driving circumstances around the automobile, can be properly enlarged using a wide-angle lens, a fisheye lens, etc. Image information for a front portion and front left and right portions of the automobile 100 is obtained by the front first camera 101.

A rear second camera 102 is directed toward the rear of the automobile 100 and is attached to an inner upper end of a rear windscreen glass. An angle a2, through which the second camera 102 can image driving circumstances around the automobile, can be properly enlarged using a wide-angle lens, a fisheye lens, etc. Image information for a rear portion and rear left and right portions of the automobile 100 is obtained by the rear second camera 102.

Small-sized charge-coupled devices (CCDs) can be used as the cameras, and, if desired, separate cameras can be additionally installed for left and right side portions of the automobile 100.

Also, according to the present invention, cameras having microphones provided therein can be installed, whereby images and sounds around the automobile 100 can be simultaneously obtained. In addition, other microphones can be installed inside the automobile 100, whereby, when an accident occurs, the situation inside the automobile 100 can be recorded as sounds together with images. Since a procedure for applying a technique of obtaining, recording and reproducing sound information to the present invention as described above, can be embodied by persons skilled in the art in a sufficient and easy manner, detailed descriptions for the procedure will be omitted.

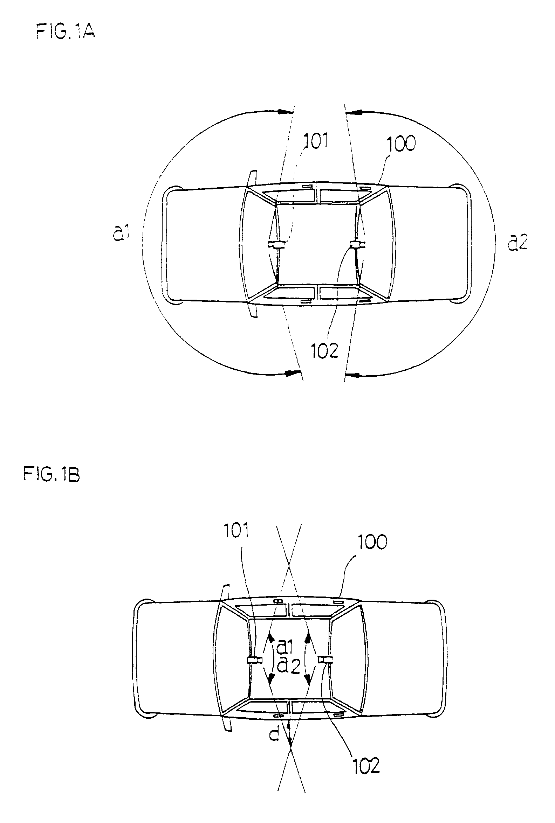

On the other hand, as shown in FIG. 1B, the first camera 101 can be installed such that it is directed from the front toward the rear of the automobile 100, and the second camera 102 can be installed such that it is directed from the rear toward the front of the automobile 100. In other words, by installing the first and second cameras 101 and 102 such that their imaging angles are crossed with each other at points which are separated from a body of the automobile 100 by a distance d, operating ranges of the cameras 101 and 102 can be preferably enlarged. In this case, the cameras 101 and 102 can operate such that they securely remove blind areas at the left and right side portions of the automobile 100.

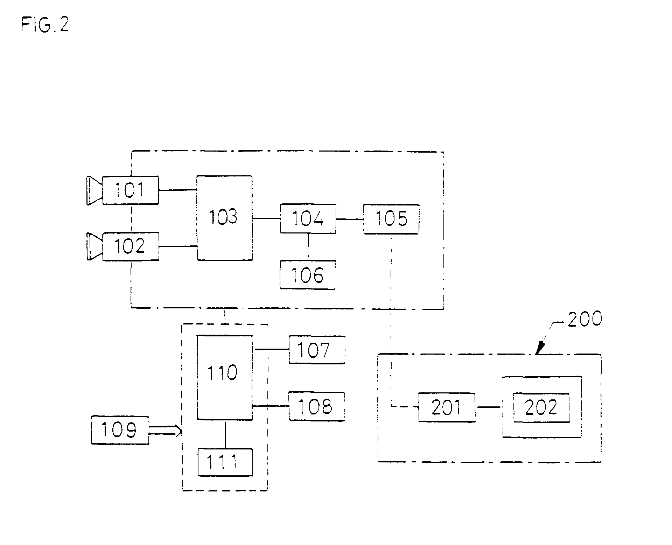

FIG. 2 shows a block diagram of the device for recording an image of the driving circumstances around an automobile according to the present invention, the device including an image reproducing device 200.

As shown in FIG. 2, the device of the present invention includes the first and second cameras 101 and 102 which are mounted to the automobile 100 in proper directions for obtaining image information around the automobile 100, a screen-two-divisional processing section 103 for two-divisionally and simultaneously recording and reproducing image information obtained by the first and second cameras 101 and 102 on a screen, an encoder section 104 for processing the image information outputted from the screen-two-divisional processing section 103 to image signals having a suitable format and for converting the image signals to digital signals, an image recording medium 105 for storing the digital image signals converted by the encoder section 104, a recording time interval establishing section 106 for establishing a recording time interval of the image signals which are recorded to the image recording medium 105, a main power supply section 107 of the automobile 100 itself and an auxiliary power supply section 108, an impact sensor section 109 for sensing physical impact applied to the automobile 100, a power source switching section 110 for supplying power from the main power supply section 107 of the automobile 100 itself in an ordinary time and for supplying power from the auxiliary power supply section 108 when impact is sensed by the impact sensor section 109, and a forced-driving time establishing section 111 for establishing a power supplying time by the power source switching section 110 thereby establishing a time during which the image recording device is forcibly operated when impact is sensed by the impact sensor section 109.

Further, as described above, the device according to the present invention includes an image reproducing device 200. The image reproducing device 200 has a decoder section 201 for reproducing the digital image signals which are recorded to the image recording medium 105 and a display section 202 for displaying on a monitor the image signals which are reproduced by the decoder section 201.

Due to the fact that the image reproducing device 200 is constructed together with the image recording device, it is possible to immediately reproduce recorded images and to display the reproduced image signals on the monitor. However, it is also possible to provide the image reproducing device 200 as a separate element and to implement only an image recording operation.

The image recording medium 105 is a medium which can store digital image signals and is constituted by a large scale hard disk drive (HDD), a flash memory, a rewritable CD-ROM, etc. Further, the image recording medium 105 can be realized such that it can be connected to and disconnected from the image recording device via a component such as a connector, a communication port or the like.

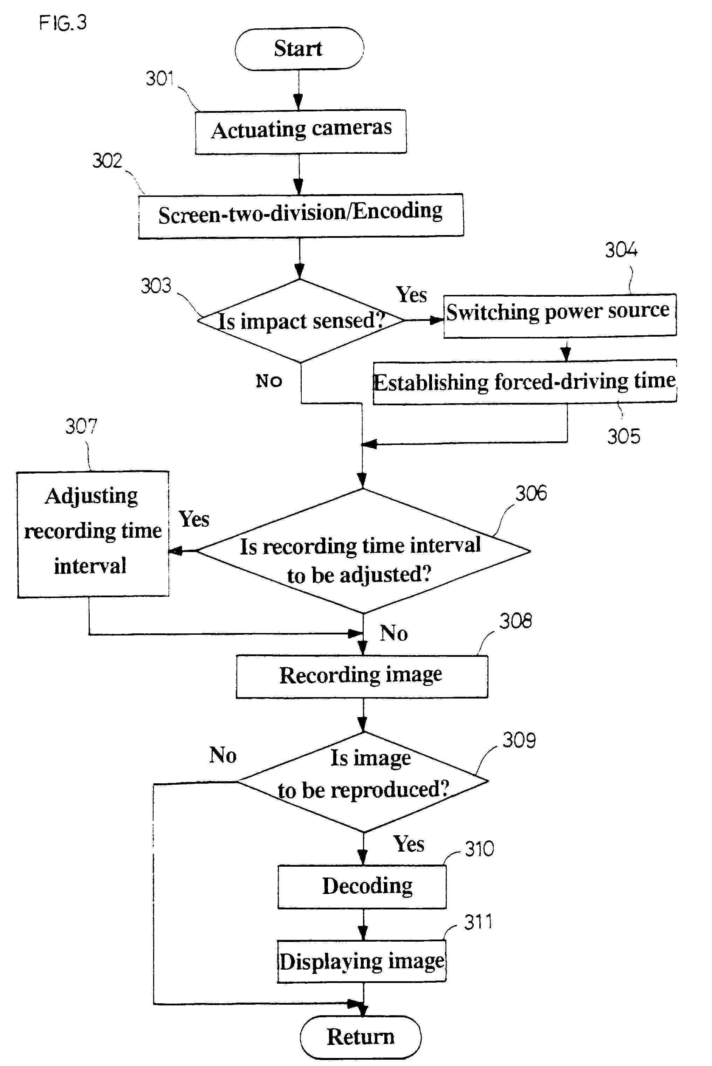

Operation of the device for recording an image of driving circumstances around an automobile according to the present invention, constructed as mentioned above, will now be described in detail with reference to the block diagram of FIG. 2 and the flowchart of FIG. 3.

In an ordinary time, the power source switching section 110 supplies the power necessary for operating the device from the main power supply section 107 of the automobile 100 itself. The main power section 107 is therefore the automobile's battery.

If the power is supplied to the device, the operation of the first and second cameras 101 and 102 is initiated at step 301. Then, at step 302, images of the front and rear portions and side portions of the automobile 100, which are obtained by the first and second cameras 101 and 102, are processed on the left and right or upper and lower two-divisional screen by the screen-two-divisional processing section 103, and the processed image signals are converted into digital signals by the encoder section 104.

The screen-two-divisional processing as described above is implemented so that the images obtained by the first and second cameras 101 and 102 are simultaneously monitored on one screen.

The first and second cameras 101 and 102 can be constituted by CCDs which can obtain monochrome or color images. In the case where color images are obtained, information regarding the type and color of an offending automobile and facial features and clothes of an offender can be more precisely obtained.

If desired, additional cameras can be installed for obtaining images for the left and right side portions of the automobile 100. For example, in the case that four cameras are used, a screen-four-divisional processing in which four camera images are simultaneously displayed on one screen, is implemented.

The encoder section 104 functions not only to convert the obtained image signals to digital signals, but also to process (encode) the obtained image signals to have a proper signal format. For example, the encoder section 104 constructs digital image signals having a signal format which corresponds to NTSC standards.

The digital image signals are recorded to the image recording medium 105.

At this time, at step 303, a judgment for determining whether or not an impact is sensed by the impact sensor section 109 is performed. Impact sensors are installed at proper positions along a lengthwise direction and/or a widthwise direction of the automobile 100, to output a corresponding impact sensing signal when a minor collision or a crash occurs.

In the case that an impact is applied to the automobile from the outside, the power supply from the main power supply section 107 of the automobile 100 to the device can be cut. Therefore, in this case, as in step 304, a power source switching operation is implemented by the power source switching section 110, whereby power is supplied from the auxiliary power supply section 108 to the device.

At this time, as in step 305, power is continuously supplied to the device from the auxiliary power supply section 108 for a forced-driving time, for example, for 15 minutes, which is established by the forced-driving time establishing section 111, whereby it is possible to obtain/record image information for driving circumstances around the automobile 100, not only immediately before a minor collision or a crash occurs, but also for a predetermined time after the minor collision or the crash occurs.

Then, at step 306, a judgement for determining whether or not a recording time interval is to be adjusted, is performed. If it is determined at step 306 that a recording time interval is to be adjusted, a program proceeds to step 307 where a recording time interval is adjusted and established by the recording time interval establishing section 106, and thereafter, at step 308, an image recording operation is implemented for the established recording time interval.

For example, while the automobile 100 is running, the image recording operation is implemented continuously, and while the automobile 100 is parked or stopped, images for the driving circumstances around the automobile 100 are recorded in the form of capture images with a predetermined time interval in view of the recording capacity (recording time) of the image recording medium 105.

By performing step 308, image information for driving circumstances around the automobile 100 is recorded to the image recording medium 105 as digital information.

The digital information is stored to the image recording medium 105 after being compacted using a proper compaction program, whereby it is possible to cope with a limitation in recording time due to a limitation in recording capacity of the image recording medium 105.

The image signals recorded to the image recording medium 105 can be reproduced by the image reproducing device 200 mounted to the automobile 100 or by a separate reproducing device.

In the case that the image reproducing device 200 is mounted to the automobile 100, if it is determined at step 309 that images are to be reproduced (corresponding to instructions such as a reproduction key input by a user), the decoder section 201 implements a decoding operation which is a reverse process to the encoding operation and then implements a digital/analog conversion operation, thereby to reproduce digital image information. The image information reproduced by the decoder section 201 is displayed on the display section 202, as in step 311.

The display section 202 can be constituted by a VDT, an LCD, etc. In the case that the conversion operation by the encoder 104 is implemented to have an NTSC format, composite image signals are constructed using the NTSC format and then outputted, and the images obtained by the two first and second cameras 101 and 102 and screen-two-divisionally processed are displayed on one display section 202.

In the case that the image reproducing device is provided as a separate element, the image recording medium 105 is disconnected from the connector, the communication port or the like, and then, the image recording medium 105 is connected to the image reproducing device using a connector, a communication port or the like, thereby to enable signal encoding and displaying.

In the case that the image reproducing device 200 is constituted by a PC having a capture board, it is possible to store images to be displayed in the form of a file after implementing a capture process. It is also possible to print the images.

The device for recording an image of driving circumstances around an automobile as shown in FIGs. 1A through 3, of the present invention, represents a preferred embodiment of the present invention. By using the present invention, a situation of an accident can be reproduced in a more realistic manner in that sound information obtained by microphones installed inside and outside the automobile can be recorded and reproduced together with the image information.

As described above, by using the device for recording an image of driving circumstances around an automobile according to the present invention, advantages are provided in that since a real-time recording of images and sounds around the automobile is accomplished during running, parking or stopping, convincing evidence of a minor collision, a crash, etc. which occurs in association with another automobile can be secured as image and sound information.

Furthermore, even if a battery power supply of the automobile is shut off due to the occurrence of an accident, because power is continuously supplied from an auxiliary power supply section to ensure continuity of an image recording operation, convincing evidence of the accident can be secured.

Moreover, since images around the automobile can be recorded for many hours in the form of a capture image when the automobile is parked or stopped, a function of preventing a crime against the automobile is simultaneously achieved, whereby information including not only the type of the offending automobile, but also the color and license number of the offending automobile, facial features and clothes of an offender, etc. can be precisely obtained as highly reliable information. This removes the need to depend upon a witness.

In the drawings and specification, there has been disclosed typical preferred embodiments of the invention and, although specific terms are employed, they are used in a generic and descriptive sense only and not for purposes of limitation, the scope of the invention being set forth in the following claims.

## Claims

1. A device for recording an image of driving circumstances around an automobile (100), the device comprising:
at least two cameras (101,102) directed in different directions and mounted to the automobile (100) for obtaining in real time the driving circumstances around the automobile (100) as image information;
image recording means (105) for recording in real time image information,
**characterized in that** if further comprises
screen-divisional processing means (103) for divisionally recording and reproducing image information obtained by the at least two cameras (101,102) on a screen;
encoder section (104) for processing the image information outputted from the screen-divisional processing means (103) to a format which is suitable for recording and reproducing; and **in that**
the image recording means (105)
stores the image signals processed by the encoder section (104).

2. The device as claimed in claim 1, further comprising recording time interval adjusting means (106) for adjusting a recording time interval of an image signal which is recorded to the image recording means (105).

3. The device as claimed in claim 1 or claim 2, further comprising:
impact sensing means (109) for sensing an impact applied to the automobile (100) from the outside;
an auxiliary power supply section (108) for supplying power when an impact is sensed by the impact sensing means (109); and
means (110) for switching a power source from a main power supply section (107) of the automobile (100) to the auxiliary power supply section (108) when an impact is sensed by the impact sensing means (109), thereby forcibly driving the device for a predetermined time.

4. The device as claimed in any preceding claim, further comprising means (200) for reproducing and displaying image signals recorded to the image recording means (105).

5. The device as claimed in any preceding claim, wherein, the cameras mounted to the automobile include a first camera (101) and a second camera (102), the first camera (101) installed to be directed from the front toward the rear of the automobile (100), and the second camera (102) installed to be directed from the rear toward the front of the automobile (100).

6. The device as claimed in any preceding claim, wherein microphones are installed inside and outside the automobile (100), whereby it is possible to implement a sound recording operation as well as an image recording operation.

## Patentansprüche

1. Vorrichtung zur Aufzeichnung eines Bilds im Verkehrsumfeld rund um ein Automobil (100), folgendes aufweisend:
mindestens zwei Kameras (101, 102), welche in verschiedene Richtungen gerichtet sind und am Automobil (100) angebracht sind, um in Echtzeit das Verkehrsumfeld rund um das Automobil (100) als Bildinformation zu erhalten,
eine Bildaufzeichnungseinrichtung (105), um in Echtzeit Bildinformation aufzuzeichnen,
**dadurch gekennzeichnet, dass** sie ferner
eine Einrichtung zum Bildschirm-unterteilten Verarbeiten (103), um die von den mindestens zwei Kameras (101, 102) erhaltene Bildinformation unterteilt aufzuzeichnen und auf einem Bildschirm wiederzugeben,
ein Kodiererteil (104), um die von der Einrichtung zum Bildschirm-unterteilten Verarbeiten (103) ausgegebene Bildinformation in ein Format weiter zu verarbeiten, welches für die Aufzeichnung und Wiedergabe geeignet ist,
aufweist und die Bildaufzeichnungseinrichtung (105) die von dem Kodiererteil (104) weiter verarbeiteten Bildsignale aufzeichnet.

2. Vorrichtung wie in Anspruch 1 beansprucht, welche ferner eine Einrichtung zum Ausgleichen des Aufzeichnungszeitintervalls (106) aufweist, um ein Aufzeichnungszeitintervall eines Bildsignals, welches in der Bildaufzeichnungseinrichtung (105) aufgezeichnet wird, zu justieren.

3. Vorrichtung wie in Anspruch 1 oder Anspruch 2 beansprucht, ferner aufweisend:
einen Stoßmessfühler (109), um einen von außen auf das Automobil (100) ausgeübten Stoß wahrzunehmen,
ein Hilfsenergieversorgungsteil (108), um Energie bereitzustellen, wenn ein Stoß vom Stoßmessfühler (109) wahrgenommen wird, und
eine Einrichtung (110) zum Umschalten einer Energiequelle von einem Hauptenergieversorgungsteil (107) des Automobils (100) auf das Hilfsenergieversorgungsteil (108), wenn ein Stoß vom Stoßmessfühler (109) wahrgenommen wird, wodurch es die Vorrichtung gezwungenermaßen für eine vorher festgelegte Zeit betreibt.

4. Vorrichtung wie in einem vorhergehenden Anspruch beansprucht, ferner eine Einrichtung (200) aufweisend, um Bildsignale, die in der Bildaufzeichnungseinrichtung (105) aufgezeichnet sind, wiederzugeben und dazustellen.

5. Vorrichtung wie in einem vorhergehenden Anspruch beansprucht, worin die am Automobil angebrachten Kameras eine erste Kamera (101) und eine zweite Kamera (102) umfassen, wobei die erste Kamera (101) aufgestellt ist, um von der Front in Richtung auf das Heck des Automobils (100) gerichtet zu sein, und die zweite Kamera (102) aufgestellt ist, um vom Heck in Richtung auf die Front des Automobils (100) gerichtet zu sein.

6. Vorrichtung wie in einem vorhergehenden Anspruch beansprucht, worin Mikrophone innerhalb und außerhalb des Automobils (100) aufgestellt sind, um sowohl einen Schallaufzeichnungsvorgang als auch einen Bildaufzeichnungsvorgang durchzuführen.

## Revendications

1. Dispositif pour enregistrer une image concernant des circonstances de conduite autour d'une automobile (100), le dispositif comportant :
au moins deux caméras (101, 102) orientées dans des directions différentes et montées sur l'automobile (100) pour obtenir en temps réel les circonstances de conduite autour de l'automobile (100) en tant qu'informations d'image,
des moyens d'enregistrement d'images (105) pour enregistrer en temps réel des informations d'image,
**caractérisé en ce qu'**il comporte en outre :
des moyens de traitement avec division de l'écran (103) pour enregistrer et lire d'une manière divisée les informations d'image obtenues par les aux moins deux caméras (101, 102) sur un écran,
une section de codage (104) pour traiter les informations d'image délivrées en sortie depuis les moyens de traitement avec division de l'écran (103) dans un format qui est adapté pour l'enregistrement et la lecture, et **en ce que**
les moyens d'enregistrement d'images (105) mémorisent les signaux d'image traités par la section de codage (104).

2. Dispositif selon la revendication 1, comportant en outre des moyens d'ajustement d'intervalle de temps d'enregistrement (106) pour ajuster un intervalle de temps d'enregistrement d'un signal d'image qui est enregistré sur les moyens d'enregistrement d'images (105).

3. Dispositif selon la revendication 1 ou la revendication 2, comportant en outre :
des moyens de détection d'impact (109) pour détecter un impact appliqué à l'automobile (100) par l'extérieur,
une section d'alimentation en énergie auxiliaire (108) pour délivrer de l'énergie lorsqu'un impact est détecté par les moyens de détection d'impact (109), et
des moyens (110) pour faire basculer une source d'énergie à partir d'une section d'alimentation en énergie principale (107) de l'automobile (100) vers la section d'alimentation en énergie auxiliaire (108) lorsqu'un impact est détecté par les moyens de détection d'impact (109), commandant ainsi de force le dispositif pendant une durée prédéterminée.

4. Dispositif selon l'une quelconque des revendications précédentes, comportant en outre des moyens (200) pour lire et afficher des signaux d'image enregistrés sur les moyens d'enregistrement d'images (105).

5. Dispositif selon l'une quelconque des revendications précédentes, dans lequel les caméras montées sur l'automobile incluent une première caméra (101) et une seconde caméra (102), la première caméra (101) étant installée pour être orientée de l'avant vers l'arrière de l'automobile (100), et la seconde caméra (102) étant installée pour être orientée de l'arrière vers l'avant de l'automobile (100).

6. Dispositif selon l'une quelconque des revendications précédentes, dans lequel des microphones sont installés à l'intérieur et à l'extérieur de l'automobile (100), grâce à quoi il est possible d'implémenter une opération d'enregistrement de sons ainsi qu'une opération d'enregistrement d'images.
